# EUROPÄISCHE PATENTSCHRIFT

(11) **EP 1 576 673 B1**
(45) Veröffentlichungstag und Bekanntmachung des Hinweises auf die Patenterteilung: **02.05.2007**
(21) Anmeldenummer: 03772320.2
(22) Anmeldetag: 08.11.2003
(51) Int. Cl.: G05B 19/409, H01L 33/00

(54) **VERFAHREN FÜR EINE ABBILDGETREUE, VISUELLE FERNBEDIENUNG**
METHOD FOR VISUAL REMOTE CONTROL WITH A FAITHFUL IMAGING
PROCEDE DE TELECOMMANDE VISUELLE A PARTIR D'UNE IMAGE CONFORME

(30) Priorität: 19.12.2002 DE 10259416
(43) Veröffentlichungstag der Anmeldung: 21.09.2005
(73) Patentinhaber: Krauss-Maffei Kunststofftechnik GmbH, 80997 München (DE)
(72) Erfinder: GRIMM, Günter, 86567 Hilgertshausen (DE); LABERER, Roman, 85247 Oberroth (DE)
(74) Vertreter: Zollner, Richard
(86) Internationale Anmeldenummer: PCT/EP2003/012489
(87) Internationale Veröffentlichungsnummer: WO 2004/057681

(56) Entgegenhaltungen:
- EP-A- 0 917 034
- WO-A-01/69334
- US-B1- 6 195 764

## Beschreibung

Die Erfindung betrifft ein Verfahren für eine abbildgetreue, visuelle Fernbedienung gemäß dem Oberbegriff des Anspruchs 1.

Vermehrt treten Anforderungen auf, kunststoffverarbeitende Maschinen, insbesondere Extruder und Spritzgießmaschinen, über Kommunikationsverbindungen wie Kabel, Modem oder Internet fernmäßig bedienen zu können. In diesem Zusammenhang wird als Stand der Technik auf das Europäische-Patent EP 917 034 hinwiesen, in dem die Möglichkeit der Fernbedienung einer oder mehrerer Spritzgießmaschinen, mittels beispielsweise einer Internetverbindung, beschrieben ist. Unabhängig davon sind auch Komprimieralgorithmen bekannt, um die zu übertragenden Datenmengen zu beschränken.

Problematisch bei den bisherigen Fernbedienverfahren und -vorrichtungen, sind die notwendigen Anpassung (z.B. Konfigurationsanpassungen) von Fernbedienstation einerseits und angeschlossenen Maschinen andererseits. Zur Abstimmung der Fernbedienung auf die entsprechend angeschlossene Maschine bedarf es in der Regel einer eigenen Konfiguration. Soll die Fernbedieneinrichtung dann auch für eine andere Spritzgießmaschine verwendet werden, so erfordert dies nochmals eine Anpassung. Dies ist insbesondere bei einer vollständigen Integration einer Fernbedienung in die Steuerung einer Spritzgieß- oder-Extrusionsmaschine problematisch.

Aufgabe der vorliegenden Erfindung ist es, eine Möglichkeit und ein Verfahren für eine Fernbedienung anzugeben, welche bzw. welches eine schnelle und sichere Diagnose oder Fernwartungsmöglichkeit ohne übermäßige konfigurationsmäßige Anpassung von Fernbedienstation und angeschlossener Maschine gewährleistet.

Diese Aufgabe wird durch die im Anspruch 1 angegebenen Merkmale gelöst.

Demgemäß ist ein Verfahren für eine Fernbedienung beschrieben, welches als ein Element die Idee enthält, den Bildschirminhalt eines Steuergeräts einer kunststoffverarbeitenden Maschine 1:1 auf den Bildschirm einer Fernbedienstation zu übertragen und zwar in der Weise, dass in komprimierter Form jeweils die Änderungen von einem momentanen zu einem vorhergehenden Abtastvorgang übermittelt werden. Durch die 1:1-Übertragung des Bildschirms sind keine zusätzlichen Konfigurationsanpassungen notwendig. Vielmehr sieht der Benutzer am Fernbedien-Monitor alle Angaben, die auch auf dem Monitor der eigentlichen Steuereinrichtung zu erkennen sind. Allerdings würde die Datenübertragungen von ganzen Bildschirminhalten relativ lange dauern. Demgegenüber erlaubt die ausschließliche Übertragung von Änderungen gegenüber einem vorhergehenden Bildschirminhalt unter Zuhilfenahme von Komprimiertechniken eine sehr schnelle und sichere Übermittlung der Daten.

Bei der Durchführung des erfindungsgemäßen Verfahrens wird der Bildschirmbereich eines ersten Bildschirms einer Steuereinrichtung der kunststoffverarbeitenden Maschine zunächst zeilenweise abgetastet. Nach jedem Abtastschritt wird geprüft, ob sich in dieser Zeile gegenüber einem vorhergehenden Abtast-Schritt der gleichen Zeile eine Änderung ergeben hat. Ist dies der Fall, so wird der Dateninhalt dieser Bildschirmzeile komprimiert. Solchermaßen komprimierte Daten werden dann an die Fernbedienungseinheit übertragen, dort dekomprimiert und am Bildschirm der Fernbedieneinheit angezeigt. Damit liegt auf dem Bildschirm der Fernbedieneinheit im wesentlichen die gleiche Bildinformation vor, wie auf dem Bildschirm der Steuereinrichtung der kunststoffverarbeitenden Maschinen. Durch die ausschließliche Übertragung von geänderten Bereichen muss nur ein Teil der Informationen eines gesamten Bildschirms für einen kompletten Bildbereich übertragen werden, wodurch eine Beschleunigung des Bildschirmaufbaus auf der Fernwartungsseite erreicht werden kann.

Vorzugsweise wird ein sogenannter, an sich bekannter, "Run-Length-Encoding" - Algorithmus (RLE) verwendet. Es können jedoch auch andere Algorithmen, wie beispielsweise ein sogenannter Deflate-Algorithmus oder eine weitere Variante des LZ77-Komprimierverfahrens oder andere bekannte Algorithmen verwendet werden.

Gemäß einer vorzugsweisen Ausführungsform der vorliegenden Erfindung werden mehrere komprimierte Bildschirmzeilen (beispielsweise n Zeilen) zu einem Datenpaket zusammengefasst, und dieses Datenpaket kann dann übertragen werden.

Eine weitere Reduzierung der Übertragungsdaten kann dadurch erreicht werden, dass eine geänderte Bildschirmzeile nicht komplett sondern nur die sich tatsächlich geänderten Zeilenteile übertragen werden. In einer bevorzugten Ausführungsform werden beispielsweise Sprungbefehle zum Überspringen unveränderter Pixelfolgen eingesetzt. Die Pixelfolgen können beispielsweise in verkürzter Form beispielsweise nach Anzahl und Pixelfolge gespeichert werden.

Es kann auch eine Überprüfung in der Weise eingebaut werden, dass eine Daten-Komprimierung nur dann durchgeführt wird bzw. Daten in der komprimierten Form nur dann übertragen werden, wenn die Datenmenge nach der Komprimierung kleiner ist als die unkomprimierte Datenmenge. Nur dann macht die Komprimierung überhaupt Sinn.

Sollen Eingabebefehle von einer Fernbedieneinheit an die Steuereinrichtung der kunststoffverarbeitenden Maschine zurückübertragen werden, so kann dies in unkomprimierter Form geschehen, da diese Datenmengen in der Regel nur geringen Umfang haben. Vorzugsweise besteht das Bediensystem ebenfalls aus einem Bildschirm, einer Recheneinheit und einer Eingabeeinheit.

Eine Ausführungsform der vorliegenden Erfindung wird nachfolgend in Form eines Ablaufdiagrammes anhand der einzigen beigefügten Zeichnung näher erläutert:

Bei einem erfindungsgemäßen Verfahren gemäß der beigefügten Darstellung wird in einem Schritt 10 zunächst eine bestimmte Bildschirmzeile abgetastet. In einem Schritt 12 wird dann geprüft, ob sich eine Änderung gegenüber einem vorhergehenden Abtastschritt der gleichen Bildschirmzeile ergeben hat.

Ist dies nicht der Fall, so wird zum Schritt 10 zurückverzweigt und eine nächste Bildschirmzeile abgetastet. Wird im Schritt 12 jedoch festgestellt, dass eine Änderung gegenüber einem vorhergehenden Abtastschritt vorliegt, so wird diese Bildschirmzeile komprimiert. Dabei werden die oben aufgeführten Verfahren angewendet, Solche Verfahren stehen im z.B. im Internet zur Verfügung.

Insbesondere werden nur diejenigen Zeilenabschnitte einer Bildschirmzeile in der Komprimierung erfasst und komprimiert, welche sich tatsächlich verändert haben.

In einem Schritt 16 wird dann überprüft, ob bereits die vorgegebene Anzahl von n Bildschirmzeilen komprimiert sind. Die Zahl n kann dabei von dem Administrator des Verfahrens eingegeben werden. Sind noch nicht so viele Bildschirmzeilen komprimiert, so wird in Schritt 16 zurückverzweigt und wiederum die nächste Bildschirmzeile abgetastet (Schritt 10).

Wurde in Schritt 16 festgestellt, dass n Bildschirmzeilen komprimiert wurden, so wird ein Datenpaket aus einer weiteren Komprimierung der n komprimierten Bildschirmzeilen in Schritt 18 gebildet. Diese Komprimierung kann nach dem LZW-Algorithmus erfolgen. Dieses Datenpaket wird sodann in Schritt 20 an die Fernbedienungseinheit übermittelt. Gleichzeitig wird wiederum zum Schritt 10 zurückverzweigt und eine nächste Bildschirmzeile abgetastet.

In Schritt 22 werden auf Seiten der Fernbedienungseinheit das Datenpaket sowie die einzelnen Bildschirmzeilen dekomprimiert und aus diesen Informationen in Schritt 22 der Bildschirm auf Seiten der Fernbedienungseinheit mit den übermittelten Daten, welche die Änderungen gegenüber einem vorherigen Abtastschritt im ersten Bildschirm der Steuereinrichtung enthalten, entsprechend verändert aufgebaut. Damit liegt in schneller und einfacher Weise auf der Fernbedienungsseite die gleiche Bildschirminformation wie auf der Steuerungsseite bei der kunststoffverarbeitenden Maschine vor. Mit diesem Informationen kann der Fernbediener eine Diagnose oder eine notwendige Fernbedienungsmaßnahme erkennen.

Er kann daraufhin über evtl. vorhandene Eingabemittel auf der Fernbedienseite Befehle oder Parameterinformationen eingeben und an die Spritzgießmaschine übermitteln. Da diese Daten nur relativ wenig Datenmengen enthalten, müssen diese Daten in der Regel nicht komprimiert werden.

Insbesondere kann mit dem erfindungsgemäßen Verfahren eine besondere Konfigurationsanpassung von Fernbedienungseinheit und Steuereinrichtung der kunststoffverarbeitenden Maschine vermieden werden. Das Fernbediensystem ist flexibel verwendbar.

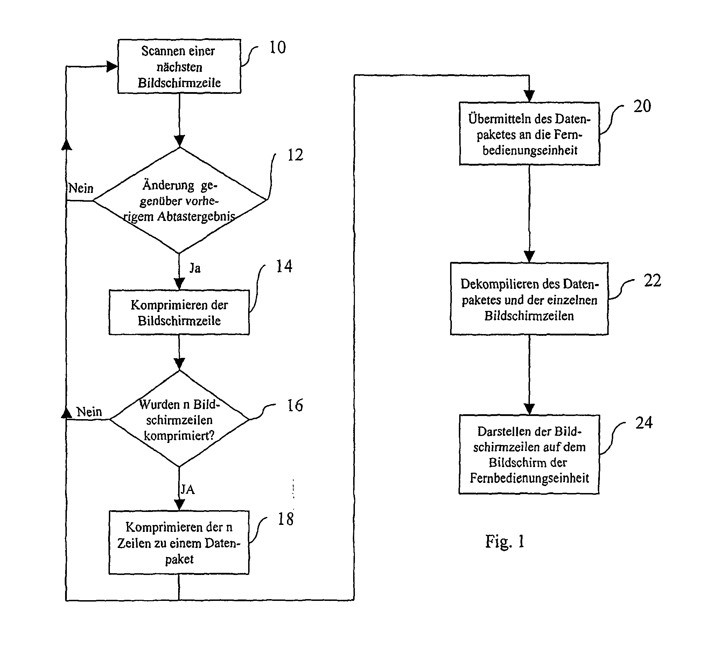

## Patentansprüche

1. Verfahren für eine abbildgetreue, visuelle Fernbedienung, bei dem eine Steuereinrichtung einer kunststoffverarbeitenden Maschine einen ersten Bildschirm aufweist, auf dem eine wechselnde Bildschirminformation zeilenweise dargestellt wird, und die Steuereinrichtung mit einer Fernbedienungseinheit verbunden ist, die einen zweiten Bildschirm umfasst, **gekennzeichnet, durch die Schritte**
- zeilenweises Abtasten des Bildbereiches des ersten Bildschirms,
- Komprimieren der Information einer Bildschirmzeile, falls gegenüber einem vorhergehenden Abtastschritt eine Änderung stattgefunden hat,
- Übermittlung der komprimierten Daten an die Fernbedienungseinheit
- Dekomprimierung der übermittelten Daten und
- Aufbau des Bildbereiches des zweiten Bildschirms unter Verwendung der übermittelten Daten, wobei ein mit dem Bildschirminhalt des ersten Bildschirmes im wesentlichen identischer Bildschirminhalt nachgebildet wird.

2. Verfahren nach Anspruch 1, **dadurch gekennzeichnet, dass** die Komprimierung mittels eines sogenannten "Run-Length-Encoding Verfahrens durchgeführt wird.

3. Verfahren nach Anspruch 1 oder 2, **dadurch gekennzeichnet, dass** aufeinanderfolgende gleiche Pixelfolgen einer Reihe von Pixel in einer Bildschirmzeile zusammengefasst und in einem Format mit Anzahl und Pixelfolge gespeichert werden.

4. Verfahren nach einem der Ansprüche 1 bis 3, **dadurch gekennzeichnet, dass** bei einer teilweisen Änderung des Inhaltes einer Zeile unveränderte Pixelfolgen übersprungen werden.

5. Verfahren nach einem der vorhergehenden Ansprüche, **dadurch gekennzeichnet, dass** die Komprimierung einer Bildschirmzeile unterbunden wird, wenn die umkomprimierte Datenmenge kleiner ist als die komprimierte Datenmenge.

6. Verfahren nach einem der vorhergehenden Ansprüche, **dadurch gekennzeichnet, dass** mehrere komprimierte Bildschirmzeilen vor der Übermittlung an die Fernbedienungseinheit nochmals komprimiert werden.

7. Verfahren nach einem der vorhergehenden Ansprüche, bei dem die Fernbedienungseinheit eine Eingabeeinheit aufweist, **dadurch gekennzeichnet, dass** über die Eingabeeinheit der Fernbedienungseinheit Daten eingegeben werden und dass diese Daten an die Steuereinrichtung der kunststoffverarbeitenden Maschine übertragen werden.

## Claims

1. A method for visual remote control with a faithful imaging, in which a control device of a plastic processing machine comprises a first screen on which changing screen information is displayed in rows and the control device is connected to a remote control unit which comprises a second screen, **characterised by** the steps
- scanning the image area of the first screen in rows,
- compressing the information of a screen row if a change has taken place compared with a preceding scanning step,
- transmitting the compressed data to the remote control unit
- decompressing the transmitted data and
- constructing the image area of the second screen using the transmitted data, wherein a screen content substantially identical to the screen content of the first screen is reproduced.

2. The method according to claim 1, **characterised in that** the compression is carried out by means of a so-called "run-length encoding" method.

3. The method according to claim 1 or 2, **characterised in that** successive identical pixel sequences of one row of pixels are combined in a screen row and stored in a format with number and pixel sequence.

4. The method according to any one of claims 1 to 3, **characterised in that** unchanged pixel sequences are skipped in the event of a partial change in the content of a row.

5. The method according to any one of the preceding claims, **characterised in that** the compression of a screen row is suppressed if the uncompressed quantity of data is smaller than the compressed quantity of data.

6. The method according to any one of the preceding claims, **characterised in that** a plurality of compressed image rows are compressed again before transmission to the remote control unit.

7. The method according to any one of the preceding claims, wherein the remote control unit comprises an input unit **characterised in that** data are input via the input unit of the remote control unit and these data are transmitted to the control device of the plastic processing machine.

## Revendications

1. Procédé de télécommande visuelle à reproduction fidèle, dans lequel un dispositif de commande d'une machine de traitement de matière plastique comporte un premier écran sur lequel est représentée une information d'écran variable et le dispositif de commande est relié à une unité de télécommande comprenant un deuxième écran, **caractérisé par** les étapes de
- balayage par ligne de la zone d'image du premier écran,
- compression de l'information d'une ligne d'écran si une modification a eu lieu par rapport à une étape de balayage précédente,
- transmission des données comprimées à l'unité de télécommande,
- décompression des données transmises et
- constitution de la zone d'image du deuxième écran en utilisant les données transmises, tandis qu'un contenu d'écran sensiblement identique au contenu d'image du premier écran est restitué.

2. Procédé selon la revendication 1, **caractérisé en ce que** la compression est réalisée au moyen de ce qu'on appelle un « procédé de codage de longueur de course ».

3. Procédé selon la revendication 1 ou 2, **caractérisé en ce que** les suites identiques successives de pixels d'une série de pixels sont réunies dans une ligne d'écran et sauvegardées dans un format avec le nombre et la suite de pixels.

4. Procédé selon l'une quelconque des revendications 1 à 3, **caractérisé en ce qu'**en cas de modification partielle du contenu d'une ligne, les séries de pixels inchangées sont sautées.

5. Procédé selon l'une quelconque des revendications précédentes, **caractérisé en ce que** la compression d'une ligne d'écran s'arrête si la quantité de données non comprimées est inférieure à la quantité de données comprimées.

6. Procédé selon l'une quelconque des revendications précédentes, **caractérisé en ce que** plusieurs lignes d'écran comprimées sont comprimées à nouveau avant transmission à l'unité de télécommande.

7. Procédé selon l'une quelconque des revendications précédentes, dans lequel l'unité de télécommande comporte une unité de saisie, **caractérisé en ce que** des données sont saisies à l'aide de l'unité de saisie de l'unité de télécommande et que ces données sont transmises au dispositif de commande de la machine de traitement de matière plastique.
